(19) Europäisches Patentamt
European Patent Office
Office européen des brevets

(11) **EP 2 222 010 A1**

(12) **EUROPEAN PATENT APPLICATION**

(43) Date of publication:
25.08.2010 Bulletin 2010/34

(51) Int Cl.:
*H04L 1/18* (2006.01)          *H04L 25/06* (2006.01)

(21) Application number: 09002456.3

(22) Date of filing: 20.02.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: ST-Ericsson SA
1228 Plan-les-Ouates - Geneva (CH)

(72) Inventor: **Heinle, Frank**
**90491 Nürnberg (DE)**

(74) Representative: **Klunker . Schmitt-Nilson . Hirsch**
**Patentanwälte**
**Destouchesstrasse 68**
**80796 München (DE)**

(54) **Method of processing a data set on a receiving side of a communication system**

(57)    A method of processing a data set on a receiving side of a communication system, the data set corresponding to a source data set transmitted from a sending side of the communication system over a communication channel, wherein the data set comprises a plurality of soft data values, each soft data value corresponding to a bit of the source data set, comprises estimating a signal quality factor of the data set, scaling the plurality of soft data values based on the signal quality factor and reducing a bit resolution of the soft data values to provide scaled soft data values, storing the signal quality factor and the scaled soft data values in a memory, and using the stored signal quality factor and the stored scaled data values for further processing.

Figure 6

EP 2 222 010 A1

**Description**

Background of the Invention

Field of the Invention

The present invention is directed to a method of processing a data set on a receiving side of a communication system as well as a received data processing unit.

Description of the Related Art

Modern communication systems support a variety of different services, e.g. the transmission of voice, video, e-mail and other data. The data of a particular application consists of a data bit stream. In order for the data bit stream to be transmitted from a sender to a receiver, the data stream undergoes a number of processing steps, for example: addition of data identifying the sender, the receiver and the type of application, addition of routing information, addition of redundant data in order to ensure data integrity after transmission, to only name very few. Many modern communication systems are based on the Open System Interconnection (OSI) reference model, which is standardized by the International Organization for Standardization (ISO). This model defines seven layers, wherein, on the sending side, each layer contains processing steps to be applied to the data to be sent, whereas each layer, on the receiving side, contains the respective processing steps for reverting the processing done to the data on the sending side on the according layer. Thus, it is ensured that the application data sent off is actually transmitted to the desired recipient.

In the design of wireless communication systems, the lowest two layers of the OSI reference model pose a particular challenge. Layer one comprises the physical data transmission over the communication channel, which is the air interface for wireless communication systems. Layer two, the data link layer, provides functionality to ensure the integrity of the data transmitted over the physical transmission channel for higher level layers. The particular challenge arises from the low channel capacity of the air interface and the often times high bit error rates experienced when transmitting data over said interface. In extremely simplistic terms, redundancy is added to the higher level information in the data link layer via channel encoding on the sender side. On the first layer, a carrier signal is modulated with said channel encoded data and said modulated carrier signal is transmitted to the receiver. On the receiver side, the signal is demodulated and channel decoding is performed in order to eliminate the data redundancy again, while performing error detection and/or error correction. Many measures for efficient use of the air interface, including efficient channel encoding and decoding, are known to a person skilled in the art and are therefore not discussed in detail.

In the 3rd Generation Partnership Project (3GPP) specification, i.e. particularly for communication systems according to the Universal Mobile Telecommunications Systems (UMTS) standard, a rate matching functionality is defined which adapts arbitrary user data rates to a limited set of possible physical data rates on the air interface. In other words, a user data rate has to be matched to an allowable air interface data rate on the sending side of a communication link. Said rate matching is done after the addition of redundancy, i.e. after channel encoding has been carried out.

In the 3GPP standard, rate matching is carried out on a data block basis, for example a data block containing 20 ms of voice data. Based on the user data rate, i.e. the application data plus higher level header bits plus channel encoding redundancy bits per unit time, one out of a limited set of possible data rates for the physical channel is selected. Assuming that the physical data rate selected is smaller than the user data rate, an according number of bits has to be removed from the user data before being transmitted over the physical channel.

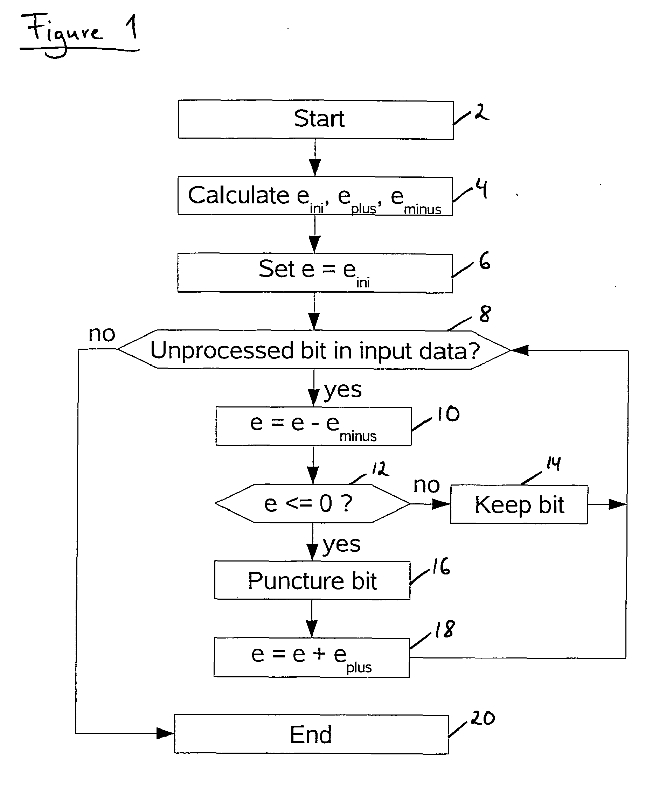

According to the 3GPP standard, such a bit reduction is carried out as shown in Figure 1. At step 2, the processing of new input data is started (input and output referring to the input and output of the rate matching). Subsequently, at step 4, the three variables $e_{ini}$, $e_{plus}$, $e_{minus}$ are calculated. The calculation of $e_{plus}$ and $e_{minus}$ is illustrated with the following example. It is assumed that the application data comprises 2498 bits (with application data referring to the application data after processing throughout the OSI layers, including channel encoding). It is further assumed that the desired data length for transmission over the physical channel is 1637 bits. Accordingly, $e_{plus}$ will be set to 2498, and $e_{minus}$ will be set to 861, which is the difference between 2498 and 1637. The value of $e_{ini}$ is set according to complex calculations laid out in the 3GPP standard, the importance of which will become apparent and be discussed later. For the present example, assume $e_{ini}$ to be 1000. Note that the values given for $e_{plus}$, $e_{minus}$ and $e_{ini}$ are for illustrative purposes only and have no basis in real communications systems.

At step 6, a processing variable e is set to the value of $e_{ini}$. Subsequently, at step 8, processing of the application data is started with the first bit. At step 10, the processing variable e is decremented by $e_{minus}$. In the present example, e will have a value of 139 at this point. At step 12, it is determined if e is smaller than or equal to 0. Since e is greater than 0, it is determined at step 14 that this first bit is kept for transmission over the physical channel. According to step 8, the second bit of the application data block will now be processed. At step 10, the variable e will be decremented by $e_{minus}$, yielding e equal to -722 in the present example. Accordingly, it will be determined at step 12 that e is smaller than 0. Hence, at step 16, the second bit of the application data will be punctured, i.e. removed, and at step 18, e will be incremented by $e_{plus}$. Subsequently, above described loop will be executed for every bit in the application data. Through the selection of $e_{plus}$ and $e_{minus}$, it is ensured that the data transmitted over the physical channel contains exactly 1637 bits. As soon as all application data bits are processed, the routine will be ended at step 20.

As is apparent from above discussion, the selection of $e_{ini}$ determines to a large extent which bits are punctured. For example, had $e_{ini}$ been 2000 in above example, the third application data bit would have been the first bit to be removed. As there are bits of different importance levels and the bits are interleaved, i.e. put into a pseudo-random order, selection of $e_{ini}$ has to be seen in a greater context and is standardized for 3GPP communication systems.

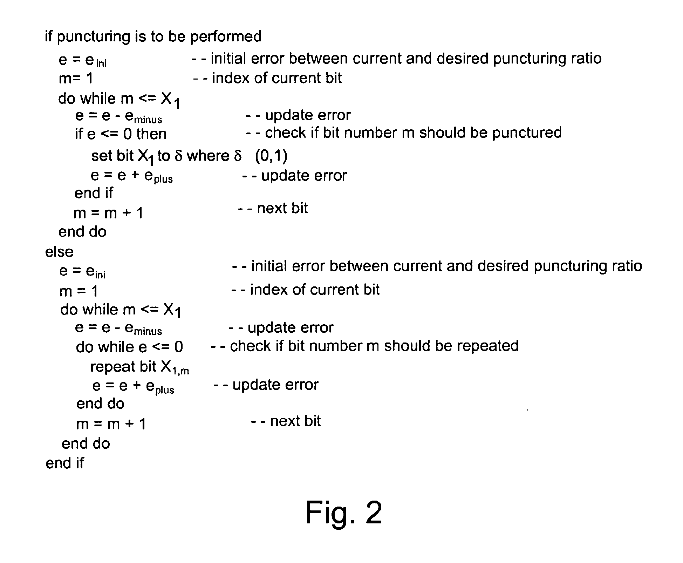

For the opposite case, i.e. the application data rate being smaller than the data rate assigned on the physical transmission channel, certain application data bits are repeated in order to adjust the data rate, wherein the bits to be repeated are selected based on a similar algorithm involving e, $e_{ini}$, $e_{minus}$ and $e_{plus}$. The computation of UMTS rate matching patterns on a sender side according to the 3GPP TS 25.212, ch 4.2.7.5 standard is shown in Figure 2. Clearly, puncturing and repeating of application data bits has to be reversed on the receiver side, which is called de-puncturing or de-repetition, in order to re-establish the original application data rate.

In a greater context, rate matching is embedded into the chain of application data processing carried out on the physical layer and the data link layer of modern communication systems. Particularly, in High-Speed Downlink Packet Access (HSDPA), which is part of release 5 of the 3GPP standard, the rate matching is conceptually linked to the so-called hybrid automatic repeat request (HARQ) functionality with incremental redundancy. Specifically, channel encoding is applied to higher level application data, usually via turbo codes. Also on the sending side, additional redundancy is added for HARQ purposes, for example a cyclic redundancy code (CRC). Subsequently, rate matching is carried out and the data bits are sent over the physical channel after being modulated with a carrier signal. On the receiving side, the signal picked up by an antenna is demodulated and run through digital signal processing, for example an equalizer. According to the standard, it is not decided at this point which one of the two possible bit values has been sent, i.e. no hard bit decision is made. Instead, a signal consisting of usually eight bits per sent bit, a so-called soft bit, is used for further processing. The eight bits are used to encode a soft value indicating how likely it is that a logic "1" or a logic "0" has been sent. Reverse rate matching is then carried out. The data is then buffered for HARQ purposes in a memory unit. Subsequently, the data is passed on to a turbo decoder, which removes the redundancy added for channel coding. Using the additional redundancy added for HARQ purposes, it is determined if the application data could be retrieved, i.e. if the turbo decoder succeeded at decoding the application data despite the bit error rate suffered during the transmission over the physical channel. If it is determined that the data is too corrupted to be passed on to the next higher layer of the communication protocol, a signal is sent back to the sender to request re-transmitting of the data. As soon as the retransmitted data block is rate matched on the receiving side, after going through the processing steps discussed above, the originally transmitted data is fetched from the memory unit and is combined with its re-transmission. That combination of the originally sent data and the re-transmitted data is then buffered in the memory unit and sent to the turbo decoder. Subsequently, it is determined again if the quality of the combination is sufficiently high to pass the received data on to the next higher layer. If not, another re-transmission is requested from the sending side. Said process is repeated until the combination of the original transmission and all re-transmissions of the data yields sufficient quality after the turbo decoding to be passed on to further processing.

Above described technology exhibits large processing complexity, which in turn requires long processing times, fast circuitry requiring much power and large memory capacities. The processing time is long due to the complex processing chain of at least channel encoding, HARQ processing, rate matching and modulation on the sender side, and at least demodulation, equalizing, rate matching, HARQ processing and channel decoding on the receiver side. Especially for applications with tight latency constrains, such as voice transmission or real time video, these long processing times are a serious concern. Particularly in view of the HARQ functionality, which requires iterations and re-transmissions of data, processing times are even more critical. Also, as power and device size are particularly restricted in mobile devices, large memory/buffer sizes are a further concern in mobile communication systems.

Hence, it is object of the present invention to increase the performance of communication systems, particularly to reduce memory requirements.

Summary of the Invention

According to a first aspect of the invention, a method of processing a data set on a receiving side of a communication system is proposed, the data set corresponding to a source data set transmitted from a sending side of the communication system over a communication channel, wherein the data set comprises a plurality of soft data values, each soft data value corresponding to a bit of the source data set. The method comprises estimating a signal quality factor of the data set, scaling the plurality of soft data values based on the signal quality factor and reducing a bit resolution of the soft data values to provide scaled soft data values, storing the signal quality factor and the scaled soft data values in a memory, and using the stored signal quality factor and the stored scaled data values for further processing.

This method allows for a faster, less computationally intensive and less memory intensive processing of received data in a communication system, particularly in a wireless communication system. The received soft data values are scaled based on an estimated signal quality factor, which allows for low resolution representation of the soft data values. That signal quality factor is kept in a memory. Hence, this allows for doing further processing on the data set on low resolution soft data values. As the signal quality factor is saved and therefore readily available, this method allows for selectively returning to the high resolution soft data values. In other words, for a portion of further processing steps, the stored low resolution soft data values may be worked with. For another portion of further processing steps, the low resolution soft data values may not have sufficient accuracy. However, these data sets can be processed again in a high resolution, as the scaling factor for the respective data set is still available. For the slight overhead of saving one signal quality factor per data set, all further processing can be selectively carried out on low resolution soft data values or high resolution soft data values. Hence, the processing times for the processing of low resolution soft data values are shortened and the memory requirements for buffering of soft data values, which is often done at many points throughout the processing chain, are reduced.

In a further embodiment, the scaled soft data values have a low resolution. In a particular embodiment, the scaled soft data values have a resolution of four bits per soft data value.

In another embodiment, the method, in particular the further processing, further comprises determining a transmission quality of the data set and, in case the transmission quality of the data set is determined to be not sufficient, requesting a re-transmission of the source data set from the sender. The method may additionally comprise re-scaling the plurality of soft data values of the data set based on the signal quality factor, and combining the re-scaled data set and a secondary transmission data set into a combined data set having a plurality of combined soft data values, the secondary transmission data set corresponding to the source data set re-transmitted from the sending side over the communication channel. The method may additionally comprise calculating a combined signal quality factor of the combined data set, scaling the plurality of combined soft data values based on the combined signal quality factor, and determining a combined transmission quality of the combined data set.

The memory needed in communication systems having HARQ functionality can be decreased dramatically. During the latency period when the first (or previous) transmission of a data set is saved in the receiving unit and a second (or next) re-transmission is awaited, the memory requirements can be kept low. A low resolution can be selected that may suffice for determining, in the framework of the HARQ functionality, if the transmission quality was sufficient. On the other hand, re-scaling the data set of the previous transmission and combining it with the next transmission in a high resolution before scaling the combination to a low resolution allows for the data set combination to be more accurate and significant. A virtual large dynamic range of the received signal can thus be attained. Hence, the decision about the need for another re-transmission of the source data set can be made with a higher accuracy. Consequently, in addition to the memory requirement savings, a performance gain through requiring less data set re-transmissions can be achieved as well.

According to a further embodiment, the method comprises rate matching of the data set(s) received. The rate matching may be performed after scaling the data set(s) with the respective signal quality factors, particularly in order to decrease processing complexity, or after re-scaling the data set(s), particularly in order to improve processing accuracy. Also, determination of the transmission quality of data set(s), also of combined data set(s), may be carried out after scaling the data set(s) / combined data set(s), i.e. on the basis of the scaled soft data values, or after re-scaling the data set(s) / combined data set(s), i.e. on the basis of the re-scaled soft data values.

According to another aspect of the invention, a received data processing unit for processing a data set is proposed, the data set corresponding to a source data set transmitted from a sending side of the communication system over a communication channel, wherein the data set comprises a plurality of soft data values, each soft data value corresponding to a bit of the source data set. The received data processing unit comprises a signal quality estimation unit for estimating a signal quality factor of the data set, a scaling unit, coupled to the signal quality estimation unit, for scaling the plurality of soft data values based on the signal quality factor and reducing a bit resolution of the soft data values to provide scaled soft data values, a memory, coupled to the signal quality estimation unit, for storing the signal quality factor and the scaled soft data values, and a processing unit, coupled to the scaling unit and the memory, adapted to use the stored signal quality factor and the stored scaled data values for further processing.

According to another embodiment, the received data processing unit is adapted to carry out the method of processing a data set on a receiving side of a communication system according to the first aspect of the invention and further embodiments.

According to a further embodiment, the received data processing unit comprises a rate matching unit.

According to a further aspect of the invention, a method of matching an input bit length of input data, having an input data order, to an output bit length comprises dividing the input data into a plurality of data blocks having respective data block bit lengths, providing a processing variable having an initial state, pre-calculating a block initial state of the processing variable for each of the plurality of data blocks, and separately processing each of the plurality of data blocks. Said separate processing comprises setting a current state of the processing variable to the respective block initial state of the processing variable, and iteratively selecting a bit set, comprising a pre-determined number of input bits, in accordance with the input data order, processing the respective bit set based on the current state of the processing variable and updating the current state of the processing variable based on the processing of the respective bit set. The method also comprises combining the processed data blocks into output data having the output bit length.

This method allows for a parallelization of rate matching functionality used in modern communication systems. The pre-calculation of the processing variable for arbitrary points in the input data allows for dividing the input data into an arbitrary number of data blocks with arbitrary lengths. Hence, complete flexibility is achieved in terms of how many data blocks of which length may be processed in parallel. This allows for multiple new design options. If the data blocks are processed at the same time and the processing speed is kept unchanged as compared to the rate matching method previously used, the processing time is substantially reduced. On the other hand, if no processing time improvements are needed in a particular embodiment, slower processing circuitry can be used for processing the individual data blocks, with slower circuits generally consuming less power than fast circuits. Consequently, this aspect of the present invention allows a processing time gain or a reduction in consumed power or any combination/tradeoff thereof.

In a particular embodiment of the invention, the method of bit length matching is included in the method of processing a data set on a receiving side of a communication system, particularly for rate matching purposes. In this embodiment, the input data for the bit length matching may be a subset of the data set processed in the receiving side processing method. The subset is understood herein as a portion of the data set or as the data set as a whole. It is furthermore considered equivalent, if the input data for the data length matching consists of multiple data sets stemming from multiple executions of the method of processing a data set on a receiving side of a communication system. Including the method of bit length matching in the method of processing a data set on a receiving side of a communication system allows for performance gains in terms of processing time reduction and/or power requirement reductions in addition to the memory requirement reductions discussed above.

According to an embodiment of the invention, the method of bit length matching is implemented in the sender and/or receiver of a communication system, particularly a wireless communication system, for rate matching. Accordingly, the performance gains discussed above can be taken advantage of twice in a communication system, on the sending side as well as on the receiving side, because rate matching functionality is implemented on both ends. However, depending on the overall system configuration, it may be chosen to only implement the method of bit length matching according to an aspect of the invention and further embodiments in the sender or the receiver.

In a further embodiment, the communication system is in accordance with the UMTS standard. This is particularly advantageous, as the method of bit length matching is in full compliance with and achieves the same results as the UMTS standard, even though the standard requires bit by bit processing of the input data in the rate matching step.

According to a further embodiment of the invention, multiple data blocks are processed in parallel, particularly at substantially the same time, when carrying out the method of bit length matching. The parallel processing allows for a substantial reduction in processing time and/or a substantial reduction in power consumed, as discussed above. Depending on the greater system architecture, parallel processing does not have to mean that multiple data blocks are processed at exactly the same time. For example, when data blocks are transferred from a memory to a plurality of data block length adapting units, the connection therebetween, for example a data bus, may only be able to support transmission of one data block at a time. Consequently, a first data block may be transferred to a first data block length adapting unit at a first point in time, a second data block may be transferred to a second data block length adapting unit at a second point in time after the first point in time, etc.. Accordingly, processing of the first data block is started before processing of the second data block, etc.. Depending on the transfer time over the data bus and the processing time in the data block length adapting unit, processing of the first, the second, etc. data block may overlap to a certain extent. Consequently, processing of data blocks at substantially the same time is meant to be processing of data blocks in parallel, while considering further system requirements.

According to another aspect of the invention, a data length matching unit comprises a memory for storing input data, having an input data order and an input bit length, and output data, having an output bit length; a processor being adapted to divide the input data into a plurality of data blocks having respective data block lengths, to provide a processing variable having an initial state, and to pre-calculate a block initial state of the processing variable for each of the plurality of data blocks; and a plurality of data block length adapting units. Each data block length adapting unit is adapted to process data blocks by setting a current state of the processing variable to the respective block initial state of the processing variable, iteratively selecting a bit set, comprising a predetermined number of input bits, in accordance with the input data order, processing the respective bit set based on the current state of the processing variable and updating the current state of the processing variable based on the processing of the respective bit set, and transmitting the processed data block to the memory.

According to a particular embodiment of the invention, the data length matching unit may be included in the received data processing unit according to an aspect of the invention and further embodiments, particularly included in a rate matching unit of the received data processing unit. The memory of the received data processing unit and the memory of the data length matching unit may be separate entities or may be one single memory unit. Also, the processing unit of the received data processing unit and the processor of the data length matching unit may be separate entities or may be one single processor.

According to a further embodiment of the invention, the data length matching unit is adapted to carry out the method of matching an input bit length of input data to an output bit length in accordance with an aspect of the invention and further embodiments. The data block length adapting units may be implemented in hardware due to processing time considerations.

According to another embodiment, the sender and/or receiver of a communication system, particularly a wireless communication system, more particularly a UMTS communication system, comprises a data length matching unit according to an aspect of the invention and further embodiments.

Brief Description of the Drawings

Embodiments of the invention are described in greater detail below with reference to the Figures, wherein:

Figure 1 shows a flow diagram illustrating rate matching in accordance with the UMTS standard;

Figure 2 shows, in pseudo code, rate matching as carried out by a sender in a UMTS standardized system;

Figure 3 shows a schematic diagram of a rate matching unit in accordance with an embodiment of the present invention;

Figure 4 shows a flow diagram illustrating a method of rate matching in accordance with an embodiment of the present invention;

Figure 5 shows embodiments of the step of processing of data blocks of Figure 4 in more detail, particularly for the cases of puncturing (Figure 5A) and repetition (Figure 5B);

Figure 6 shows a schematic diagram of a receiving side processing chain of a wireless communication system in accordance with an embodiment of the invention; and

Figure 7 schematically shows a system architecture for combining two receiver side data sets stemming from two transmissions of a sender side source data set as may be used in the processing chain of Figure 6.

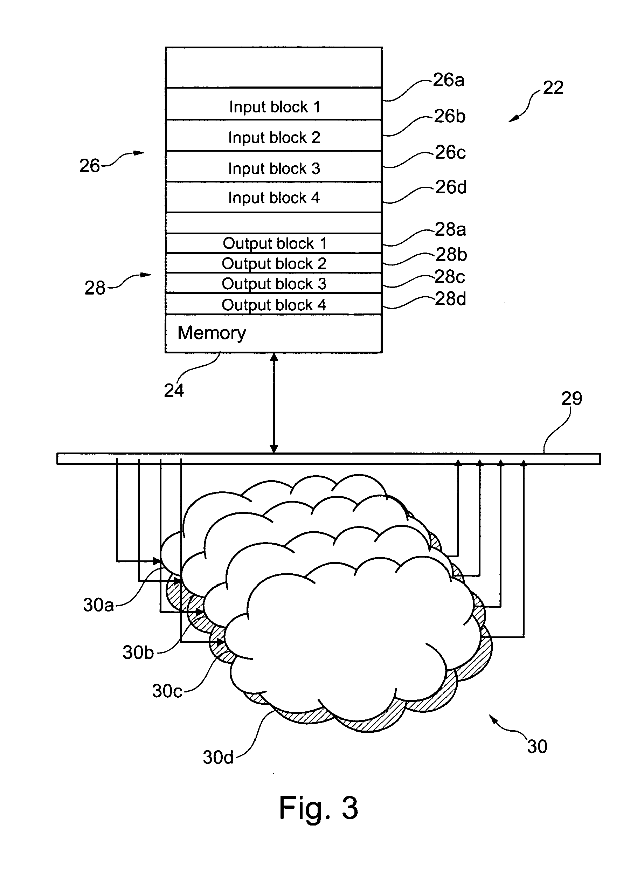

The structure of a data length matching unit 22 in accordance with an embodiment of the present invention is schematically shown in Figure 3. In the context of wireless communication systems, which are a particular filed of application for the embodiment described, the date length matching unit may also be referred to as rate matching unit. The data length matching unit 22 comprises a memory 24, a data bus 29 and four data block length adapting units 30a, 30b, 30c, and 30d. In the state exemplarily depicted in Figure 3, four input data blocks 26a, 26b, 26c, and 26d as well as four output data blocks 28a, 28b, 28c, and 28d are currently contained in memory 24. Memory 24 is coupled to data bus 29 via a two-way connection. Further, each of the data block length adapting units 30a through 30d has an input line coupled to data bus 29 and an output line coupled to data bus 29, respectively. Additionally, a processor (not shown) may be provided to control the data length matching and the memory access. Alternatively, memory 24 and data block length adapting units 30a to 30d may be equipped with sufficient intelligence to control memory access and block length adaptation themselves.

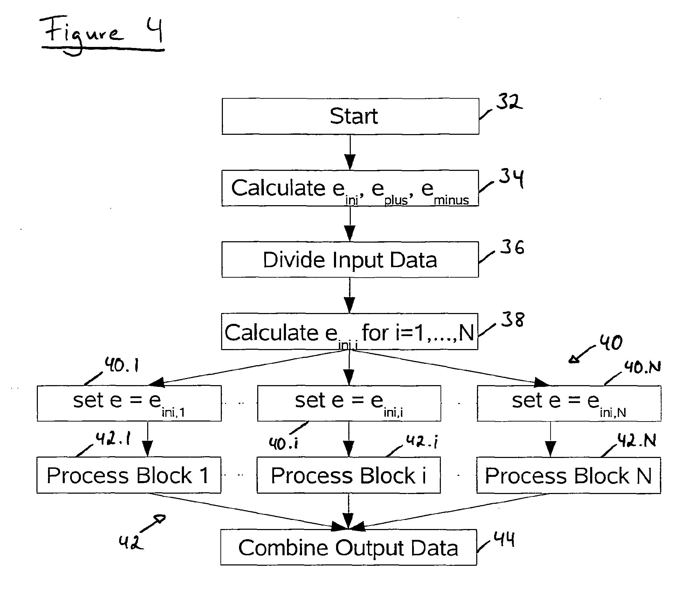

The operation of the data length matching unit 22 is described with reference to the flow diagram of Figure 4. It is pointed out that the flow diagram of Figure 4 covers the general case of having N data block length adapting units and of input data being divided into N data blocks. At step 32, the input data is written into memory 24. Said input data has an input bit length and an input data order. Also, a desired output bit length is determined. On a sending side, the desired output bit length is determined based on the physical data rates available over the interface. On a receiving side, the output bit length corresponds to the original bit length of the data on the sending side before rate matching was applied. $e_{plus}$ and $e_{minus}$ are calculated from the input bit length and the desired output bit length in step 34, exemplarily in a manner as discussed above. Said values are calculated by the processor and provided to the data block length adapting units 30a to 30d. Also in step 34, the value of $e_{ini}$ is determined, with said determination being related to the greater channel coding context as discussed above and being carried out in a standardized manner.

At step 36, the processor divides the input data into data blocks, i.e. it determines borders with the bit preceding the border belonging to an earlier data block and the bit succeeding the border belonging to a later data block. The setting of the block borders is conceptually arbitrary. However, under practical considerations, it may make sense to divide the input data into data blocks of substantially the same bit length. The result of such a division according to step 36 is shown in Figure 3, with the four data blocks 26a to 26d all having substantially the same bit length.

At step 38, the block initial state of the processing variable $e_{ini,i}$ is calculated for each data block, in general terms for data blocks 1 to N. With regard to the Figure 3 embodiment, $e_{ini,1}$ to $e_{ini,4}$ are calculated. In other words, N equals to 4 in the embodiment of Figure 3. An example for the calculation of the block initial states $e_{ini,i}$ of the processing variable will be given below.

Subsequently, the N data blocks are transferred to the N data block length adapting units. In the embodiment of Figure 3, the input data is divided into 4 data blocks. Also, there are 4 data block length adapting units 30a to 30d present in the embodiment depicted. Consequently, all four data blocks may be processed in parallel.

However, the number of data blocks does not necessarily have to equal the number of data block length adapting units. It is possible that a first subset of the data blocks is processed in parallel, with further subsets being processed at later times. This is typically done, when the number of data blocks exceeds the number of data block length adapting units. This scenario can for example occur, when the data block length is chosen to be the data bus width, for example 64 bits, of the data bus connecting the memory and the data block length adapting units. In this case, a whole data block can be transmitted during one data bus clock cycle, which allows for efficient hardware usage. Also, the data bit length of the processed data block can be chosen to correspond to the data bus width. In the case of increasing the data block length, it can thus be ensured that the processed data block can be transmitted back to the memory using the data bus only once. It is, however, also possible that the number of data block length adapting units exceeds the number of data blocks present such that one or more data block length adapting units might be idling at some point.

Alongside the transfer of the data blocks 26a to 26d to the data block length adapting units 30a to 30d, the processing variable used in a respective data block length adapting unit is set to the block initial value corresponding to the respective data block to be processed. In terms of the Figure 3 embodiment, the first data block 26a is transferred to the first data block length adapting unit 30a and the processing variable in data block length adapting unit 30a is set to $e_{ini,1}$. An analogous data transmission and initializing of the current state of the respective processing variable is carried out with regard to data blocks 2, 3 and 4 in accordance with step 40.

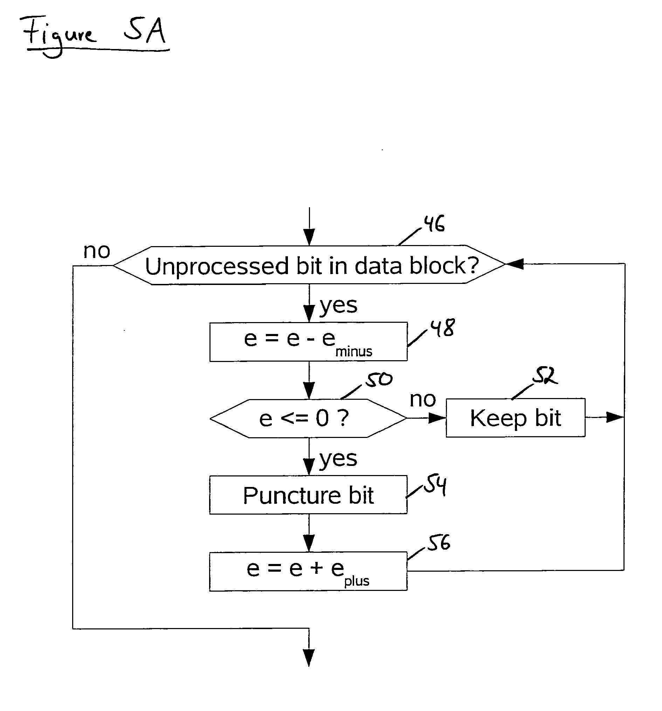

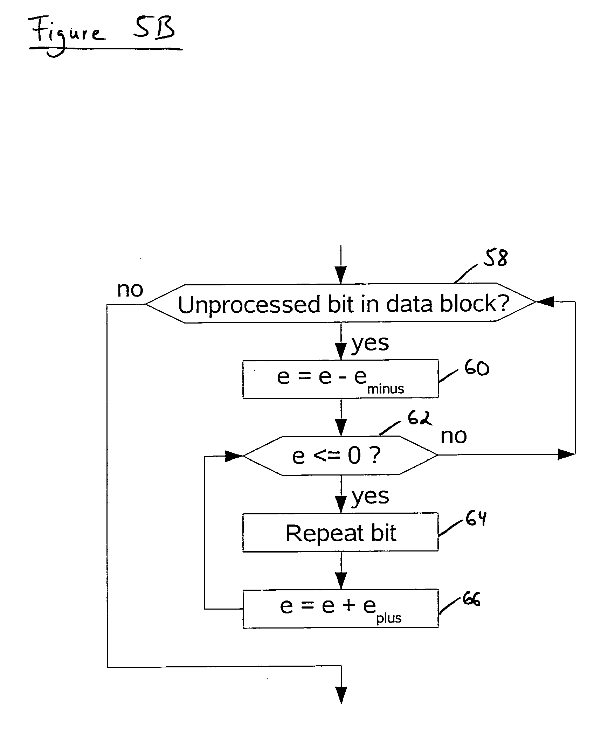

At step 42, the data blocks distributed among the data block length adapting units 30 are processed separately. As there are no interdependencies, the individual processing operations can be carried out independently from the remaining data block length adapting units. Since the operations carried out in step 42 are different for reducing the input bit length to the output bit length and increasing the input bit length to the output bit length as well as for sender and receiver, a detailed description of each of these four scenarios is given with regard to Figure 5 below.

At step 44, the processed data blocks are written from the data block length adapting units 30a to 30d to the memory 24 such that combined output data, consisting of the first processed data block 28a, the second processed data block 28b, the third processed data block 28c, and the fourth processed data block 28d, is saved for further processing.

The performance gains achieved through parallel block-wise data length matching are illustrated with a concrete example. It is assumed that the data bus 29 has a bus width of 64 bits and a bus clock of 104 MHz. In a concrete HSDPA example, 28,800 soft bits ($X_i$) are processed every 2ms. A data length adapting unit clock of 104 MHz is assumed. Further, 8 bits per soft data value and a data length adapting unit latency M of 16 cycles (2 cycles per soft bit) is assumed. For a fully serial bit length adaptation (including transfer to and from the data length adapting unit over the bus), the overall processing time amounts to:

$$T_{process} = 2 \cdot T_{bus} + \frac{X_i}{buswidth} \cdot bitspersoftbit \cdot M \cdot T_{clock,DLAU} \; ,$$

$$T_{process} = 19\,ns + \frac{28,800}{64} \cdot 8 \cdot 16 \cdot 9.6ns = 553\,\mu s \; ,$$

which is significant in light of the fact that the receiver sends an acknowledge back to the sender regarding the signal quality within 3-4 ms. Hence, around 15% to 20% of the processing time allowed are consumed by rate matching only.

With P parallel data block length adapting units and P being 4 in the embodiment of Figure 3, the overall processing time can be reduced to:

$$T_{process} = (M \cdot T_{clock,DLAU} + (P+1)T_{bus}) \cdot \frac{1}{P} \cdot \frac{X_i}{buswidth} \cdot bitspersoftbit$$

$$T_{process} = (16 \cdot 9.6\,ns + 5 \cdot 9.6\,ns) \cdot \frac{1}{4} \cdot \frac{28,800}{64} \cdot 8 = 181\,\mu s \quad .$$

Hence, in this example, the overall processing time can be reduced by 66%.

Reference is now made to Figure 5A, wherein the processing of a data block on a sending side is shown for the case that a bit length reduction is desired. For this case, the flow diagram of Figure 5A may replace each of the steps 42.1 to 42.N, shown as abstract processing steps in Figure 4.

At step 46, it is determined if another bit, which is not yet processed, exists in the respective data block. If yes, the processing variable e is decremented by $e_{minus}$ in step 48. At step 50, it is determined if e is smaller than or equal to 0. If not, the bit under consideration is kept unchanged according to step 52. If yes, the bit under consideration is punctured, i.e. removed from the data block, at step 54. Subsequently e is incremented by $e_{plus}$. After that, it is again determined if the block still contains unprocessed bits. It is pointed out that the bits are processed in their input data order. As soon as all bits are processed, processing is terminated according to step 20 and the processed data block is written to memory 24, as indicated by step 44.

Figure 5A is also used to illustrate how the block initial states $e_{ini,i}$ for the plurality of data blocks are calculated in step 38. For the case of a desired bit length reduction on the sending side of a communication system, $e_{plus}$ is chosen to be the output bit length, whereas $e_{minus}$ is chosen to be the difference between the output bit length and the input bit length. With the initial state of the processing variable e being greater than or equal to zero, it is ensured that e is always greater than or equal to zero when the next bit is looked at at step 46. It is pointed out that above described selection of $e_{minus}$ and $e_{plus}$ is just one of many options. Particularly, a multiple of both values or a fraction of both values may be used as well.

Looking at the first bit of the first data block to be processed, $e_{ini,1}$ is set to the initial state of the processing variable e as provided by a standardized determination algorithm. How $e_{ini,2}$ is determined from $e_{ini,1}$ and the known variables $e_{minus}$ and $e_{plus}$, is described as follows. Assume that it has been determined at step 36 that the first data block has a data block length of n bits. Accordingly, in order for the parallelized rate matching to yield the same result as a serial rate matching, $e_{ini,2}$ has to equal e(n+1), which is the nomenclature indicating the current state of the processing variable after n bits processed. e(n+1) can be expressed by the following formula:

$$e(n+1) = e(1) - n \cdot e_{minus} + m \cdot e_{plus} \qquad (1)$$

wherein e(1) equals $e_{ini,1}$ and m equals the number of bits punctured in the first data block. From Figure 5A, it can be seen that $e_{minus}$ is subtracted from the processing variable e n times during the processing of the first data block. Moreover, it can be seen from Figure 5A that the processing variable e is incremented m times during the processing of the first block. m is unknown, though. With the knowledge that e(n+1) has to be greater than or equal to zero, m can be calculated by the following formula:

$$m = next\ higher\ integer \left( \frac{n \cdot e_{minus} - e(1)}{e_{plus}} \right) \qquad (2)$$

wherein "next higher integer" means rounding up to the next integer value. As an example: if the expression in the parentheses yields 4.3, m = 5. Consequently, having calculated m with formula (2), e(n+1), which equals $e_{ini,2}$, can be calculated via formula (1). Consequently, $e_{ini,i}$ can be calculated from $e_{ini,i-1}$ or directly from $e_{ini,1}$, as long as the data block bit lengths of all data blocks are known.

With m being known for every data block, the bit lengths of the processed data blocks can be calculated. Hence, an according memory space may be assigned to the processed data blocks in the memory 24 such that the output data may be written to the memory 24 as an uninterrupted bit stream.

On the receiving side, the puncturing has to be reversed in order to re-establish the original data length, comparing hard bits on the sending side and soft data values on the receiving side. In terms of bits, this means that the bit data length on the receiver side is by the number of bits per soft data value higher than on the sender side. In general, the method shown in Figure 5A can also be applied on the receiving side. However, some adjustments may be made. As soft data values are processed on the receiving side, all processing steps relate to soft data values instead of bits. Hence, a step corresponding to step 52 on the sending side may be titled keeping the soft data value unchanged. A step on the receiving side corresponding to step 54 on the sending side may be titled inserting a soft data value. Said inserted soft data value preferably indicates complete uncertainty as to what information was carried by the bit in the sender side data block before puncturing. The variables $e_{minus}$ and $e_{plus}$ can either be transmitted from the sender and be used for the corresponding de-puncturing. Alternatively, they may be re-calculated from the receiving side input data bit lengths, which is the output data bit length on the sending side times bits per soft data value, and the receiving side output data bit length, which is the input data bit length on the sending side times bits per soft data value. As is apparent from simple algebra, this calculation is different from the one described above with regard to the sending side calculation of $e_{minus}$ and $e_{plus}$ (when viewed in the strict terminology of input data and output data relating to the rate matching step). However, appropriate calculation methods are apparent to a person skilled in the art. When dividing the receiving side input data into a plurality of data blocks, care is preferably taken to not distribute the bits used to encode a soft data value among different data blocks. Hence, the data blocks contain an integer number of soft data values.

Reference is now made to Figure 5B, which shows an embodiment of the processing of step 42 as carried out on a sender side when the desired output data bit length is greater than the input data bit length. At step 58, it is determined if another bit, which is not yet processed, exists in the respective data block. If yes, the processing variable e is decremented by $e_{minus}$ in step 60. At step 62, it is determined if e is smaller than or equal to 0. If not, no repetition takes place, i.e. one instance of the bit under consideration is included in the output data, the bit under consideration is considered to be processed. If yes, the bit is repeated according to step 64. Hence, another instance of the bit is included in the output data alongside the original instance of the bit under consideration. Subsequently, e is incremented by $e_{plus}$ at step 66. Thereafter, it is again determined if e is smaller than or equal to 0 at step 62. Should the answer be yes again, then the bit under consideration is repeated once more and e is incremented by $e_{plus}$ again. Consequently, there is no conceptual limit how often a bit may be repeated. Through the selection of $e_{minus}$ and $e_{plus}$, however, it is ensured that a desired output data bit length is achieved through this method.

Above discussed formulas (1) and (2) also apply in the case of increasing the input data bit length to a desired output data bit length on a sender side, i.e. for processing of data bits comprising the actions keeping data bits unchanged or repeating data bits. Therein m is the number of repetitions carried out when processing the respective block, the respective block again having a data block length of n bits. Hence, block initial states and block lengths of processed data blocks can be calculated equally for reducing the bit length and increasing the bit length.

On the receiving side, a method comprising similar processing steps as depicted in Figure 5B can be used for reverting the data length increase carried out on the sending side. However, soft data values are processed again, with the bits jointly encoding one soft data value not being separated into different data blocks in step 36. The step of de-repetition is implemented as follows: Should be determined at a step on the receiving side, which corresponds to step 62 of Figure 5B on the sending side, that the sent bit corresponding to the soft data value under consideration has not been repeated, the soft data value under consideration is included into the output data unchanged. Is, however, a repetition on the sending side determined on the receiving side, the soft data value under consideration is combined with the following soft data value. Said combination may consist in an addition. Should then be determined that another repetition has been carried out on the sending side (which corresponds to e still being smaller than or equal to 0 at step 62 after being incremented at step 66), the next soft data value is also combined with the combination of the soft data value under consideration and the soft data value corresponding to the first bit repetition on the sender side, and so on. When all soft data values corresponding to all repetitions of a particular sending side data bit are combined, said combined soft data value is included into the output data. In this way, the redundancy added on the sending side through bit repetition is utilized, because all soft data values corresponding to the plurality of instances stemming from one bit on the sending side are included to calculate a potentially more reliable soft data value through combination. The statements made about $e_{plus}$ and $e_{minus}$ with regard to the receiving side in a de-puncturing scenario equally apply to a de-repetition scenario.

In these and other exemplary embodiments, the pre-calculating of the block initial state of the processing variable for a respective data block may depend on the initial state of the processing variable and the sum of the data block bit lengths of the data blocks preceding the respective data block. Said sum follows directly from the definition of the borders between the data blocks to be processed separately. Hence, the initial state of the processing variable as well as said sum, which is a basis for the pre-calculation, are fairly easy to obtain. It is pointed out that the block initial state of the processing variable for a respective data block may as well be calculated from the block initial state of the processing variable for the data block immediately preceding the respective data block and the data block bit length of the data block immediately preceding the respective data block. This calculation of the block initial state from data block to data block is seen as an equivalent solution to calculating the block initial state from the initial state of the processing variable and the sum of the data block bit lengths of all previous data blocks.

In a further embodiment, the status of the processing variable is a number, particularly an integer number. In this case, updating the processing variable means incrementing or decrementing the number. Further, a treshold value is used for determining what type of processing is applied to the respective bit set. However, it is also possible that the state of the processing variable, and therewith the determination of how to process the respective bit set, is encoded in a different manner.

In another embodiment, the pre-calculating of the block initial state of the processing variable for a respective data block depends on the input bit length of the input data and the output bit length of the output data. From the input bit length of the input data and the output bit length of the output data, the updating of the current state of the processing variable may be deduced. This allows a pre-calculation of the block initial states based on input and output bit lengths.

According to a further embodiment of the invention, the processing of the respective bit set comprises puncturing, repeating or keeping the respective bit set unchanged, when the invention is used on a sending side of a communication system. The processing may comprise de-puncturing, de-repetition or keeping the respective bit set unchanged, when the invention is used on a receiving side of a communication system. As discussed above, the invention may be used on the sending side only, the receiving side only or on both sides. Puncturing a bit set means removing said bit set in order to yield an output bit length being smaller than the input bit length. Repeating a bit set means inserting one or more additional bit sets identical to the respective bit set in order to yield an output bit length being greater than the input bit length. De-puncturing and de-repetition are the terms used for the reverse operations. As the information carried by the punctured bits is lost, the values re-introduced via de-puncturing are not supposed to carry a false indication of what values, i.e. a logical "1" or a logical "0", the punctured bits had. As soft values are commonly used on the receiving side, a value indicating complete uncertainty may be introduced. For de-repetition, the soft values received on the receiving side may be added up in order to use the additional information readily available through the multiple transmissions of the repeated bits.

According to another embodiment, the predetermined number of input bits of the bit sets is one, when data length matching is carried out on a sending side. Thus, every bit is processed independently. However, it is also possible to have multiple bits in each bit set, when data length matching is carried out on a sending side. Thus, multiple consecutive bits are punctured or repeated. Particularly, in a case where interleaving has been performed in advance of rate matching, this might not have any negative effects due to the pseudo-random order of the bits, but can lead to a significant reduction in processing time.

In yet another embodiment, the predetermined number of input bits of the bit sets is the number of bits used for encoding a soft data value associated with one bit sent, i.e. the number of soft bits per hard bit, when data length matching is carried out on a receiving side. Thus, every soft data value is processed independently. Depending on the size of the bit sets processed in one processing step on the sending side for puncturing or repeating, an according number of soft data values is processed in one processing step on the receiving side, in order to ensure data integrity.

In a further embodiment, the pre-calculating of the block initial state of the processing variable for a respective data block comprises, on a sending side, calculating a number of bits to be punctured or repeated in all data blocks of the input data preceding the respective data block. An instance of puncturing or repeating corresponds to a particular updating of the processing variable. Hence, calculating the number of puncturings or repetitions allows for pre-calculating the current state of the processing variable at an arbitrary position, which yields the block initial state of the processing variable.

The number of bits $m_j$ to be punctured/repeated in a block j of length n having a block initial variable $e_{ini,j}$ may be calculated with the following formula:

$$m_j = next\ higher\ integer \left( \frac{n \cdot e_{minus} - e_{ini,j}}{e_{plus}} \right) \quad .$$

The block initial variable $e_{ini,j+1}$ of the next block, i.e. block j+1, may then be calculated by the following formula:

$$e_{ini,j+1} = e_{ini,j} - n \cdot e_{minus} + m \cdot e_{plus} \quad .$$

With these formulas, the processing variable can be pre-calculated without actually processing, i.e. rate matching, the whole input data serially.

Accordingly, the pre-calculating of the block initial state of the processing variable for a respective data block may comprise, on a receiving side, calculating a number of bits to be de-punctured or de-repeated in all data blocks of the input data preceding the respective data block. In this way, pre-calculating of the block initial state is carried out on the receiving side.

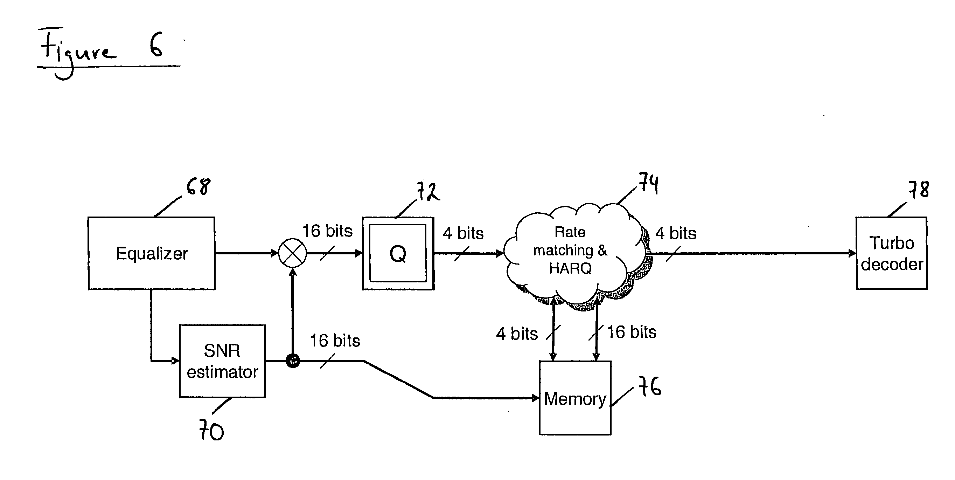

Reference is now made to Figure 6, which schematically shows a portion of a receiver of a wireless communication system.

Figure 6 depicts an equalizer 68, which is coupled to a Signal-to-Noise ratio (SNR) estimator 70 and a multiplier. The SNR estimator 70 is also coupled to the multiplier as well as to memory 76. The multiplier is coupled to quantizer 72, which in turn is coupled to rate matching and HARQ unit 74. Rate matching and HARQ unit 74 and memory 76 are linked by two connections. The rate matching and HARQ unit 74 is further coupled to turbo decoder 78.

The operation of the receiver partially depicted in Figure 6, is described as follows. When a wireless signal is received from the air interface by an antenna (not shown), it is processed in a high-frequency circuit (not shown), such as a mixer, and demodulated. The demodulated signal values are further processed in an A/D converter (not shown). For every bit sent on a sender side, a soft value is encoded. Next, the soft values are processed in equalizer 68, a description of which is omitted for brevity, as its functionality is well know in the art. At this point, the soft values are represented in a resolution of 16 bits per hard bit, i.e. per bit sent. Data sets comprising a plurality of soft values are processed jointly.

The SNR estimator 70 estimates the quality of the transmission for a data set under consideration. In other words, the SNR estimator quantifies how likely it is that a hard bit sent from the sender has been exposed to so much noise that the information carried by the bit (i.e. a logical "0" or a logical "1") can not or not reliably be retrieved. In yet other words, the SNR estimator quantifies how likely a bit error due to the imperfect air interface is. Based on that information, the SNR estimator outputs a scaling factor, also referred to as signal quality factor. Said scaling factor has the property that it scales the 16 bit soft data values of the data set under consideration in such a way that a 4 bit representation of the soft data values contains meaningful information about the reliability of the respective soft data values received. Naturally, information is lost to a certain degree when going from a 16 bit representation to a 4 bit representation. But especially with respect to the relative reliability of received values within one data set when compared to each other, this SNR based scaling achieves to encode a lot of information in a 4 bit representation of the soft data values. Such a scaling may also be based on the signal amplitude received or on a combination of the signal amplitude and an estimated SNR.

The signal quality factor is written into memory 76 in a 16 bit resolution. Also, the soft data values are multiplied with the signal quality factor. The results are then brought to a 4 bit representation in quantizer 72 and passed on to rate matching and HARQ unit 74. As the signal quality factor is readily available from memory 76, rate matching and/or HARQ can be carried out on the low resolution soft bits, having a 4 bit resolution, or on the high resolution soft bits, having a 16 bit resolution. For processing on the basis of the high resolution, the low resolution soft bits are re-scaled with the signal quality factor for the respective data set.

For example, rate matching may be done on a low resolution, which reduces processing complexity and time. Especially, when de-puncturing is to be carried out, low resolution rate matching may be used, as soft values indicating complete uncertainty may as well be represented in low and high resolutions.

However, when de-repetition is to be carried out, the high resolution may be preferable, as the combining of repeated bits, i.e. of conceptually redundant bits, may yield more accurate and therefore more useful results.

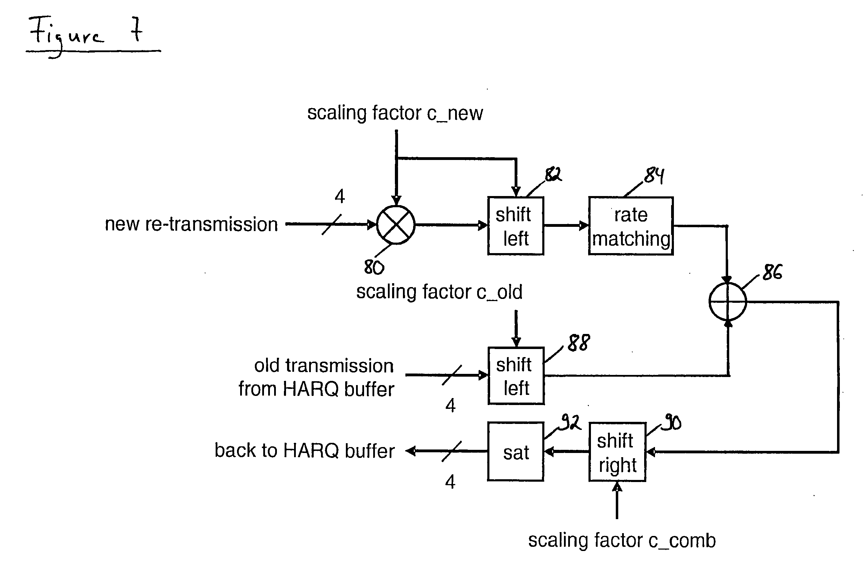

For the HARQ functionality, the respectively appropriate resolution may also be selected depending on the processing step. After rate matching, the soft data values are stored in memory 76 in the low resolution. The 4 bit data connection between memory 76 and rate matching and HARQ unit 74 is used for this data transfer. The low resolution soft data values are also passed on to the turbo decoder 78. After turbo decoding, the CRC is checked in a repeat request determination unit (not shown), and it is determined if a re-transmission of the data set under consideration is necessary. If so, a re-transmission from the sender will be requested according to the HARQ framework. When the re-transmission of the data set under consideration reaches the rate matching and HARQ unit 74 (in a 4 bit per soft data value resolution according to the processing chain), the signal quality factor for the original transmission and the signal quality factor for the re-transmission are fetched from memory 76 via the 16 bit data connection. Both data sets, the original transmission and the re-transmission are re-scaled to 16 bit resolution/accuracy for combining the original transmission and the re-transmission. This will be further illustrated with respect to Figure 7. As the 4 bit representation mainly addresses the reliability aspects of soft data values with respect to each other in one particular data set, going back to the 16 bit representation allows for a substantially more accurate combination of two data sets stemming from different transmissions. The combined data set is then scaled based on a scaling factor for the combined data set, i.e. a combined signal quality factor, to the 4 bit resolution. The combined data set and the combined signal quality factor are written to memory 76. For determining the integrity, i.e. signal quality, of the combined data, the low resolution combined data set is also passed on to the turbo decoder 78 and the subsequent CRC check. The CRC check is an exemplary embodiment of determining the data integrity.

If the combined data set passes this HARQ test, i.e. its transmission quality is ruled to be sufficient, the application data is passed on to further higher level processing. The combined data set and the combined signal quality factor may then be removed from memory 76. If not, one or more re-transmission(s) is/are requested and the respective newly arriving data set is combined with the combined data set, respectively existing thus far.

Figure 7 shows the combination of a data set, also referred to as old transmission, stemming from an original transmission of a source data set from the sender, with another data set, also referred to as new re-transmission, stemming from a second transmission of the source data set from the sender. This combination is part of the HARQ processing as carried out when an old transmission, which might already be a combination of previous transmissions, and a new re-transmission are both present. The new re-transmission reaches this combination unit in a 4 bit resolution and is re-scaled to a 16 bit resolution with the associated signal quality factor, here referred to as scaling factor c_new. In the exemplary embodiment of Figure 7, said scaling is a two stage process. The new re-transmission is multiplied with the scaling factor c_new in multiplier 80 and is then processed in the shift left unit 82.

Subsequently, the new re-transmission is rate matched in the rate matching unit 84. So, in this embodiment, the rate matching is done on the high resolution data, e.g. 16 bit resolution data. It is also possible to carry out the rate matching step before scaling the new re-transmission.

Also, the old transmission, which is fetched from the HARQ buffer in 4 bit per soft data value resolution, is re-scaled to the high resolution with its associated scaling factor c_old, which is readily available in the HARQ buffer. The re-scaling is achieved via shift left unit 88. The re-scaled old transmission and the re-scaled new re-transmission are then combined via adder 86. For the combination of the two transmissions, a scaling factor c_comb is determined. Said scaling factor c_comb is used to scale the combination of the two transmissions via shift right unit 90. In the saturation unit 92, it is ensured that no soft data value is represented in the high resolution domain in such a way that a scaling into the low resolution domain would lead to completely wrong values, particularly caused by overshooting the range representable by the low resolution. Subsequently, the combined transmission leaves this combination unit and is buffered in the HARQ buffer in a 4 bit resolution before it is checked again if further re-transmissions are necessary.

It is pointed out that the different implementations used in this embodiment for scaling and re-scaling, namely the multiplier 80 in combination with a shift left unit 82 and the shift left unit 88 alone and the shift right unit 90 alone, are all applicable for scaling, as would be a shift right unit in combination with a multiplier. Consequently, the concrete implementation used for scaling depends on design requirements and high level considerations. The combination unit of Figure 7 could therefore also be equipped with other scaling architecture.

In these and other exemplary embodiments, the method of processing a data set on a receiving side of a communication system may comprise combining further data sets corresponding to further re-transmissions of the source data set from the sending side over the communication channel with the combined data set. This allows for reaching an improved likelihood that the combination of the (re-)transmissions being associated with the same source data set will be sufficient regarding the transmission quality requirement for the combined data set, as all (re-)transmissions are taken into account. In this context, it is pointed out that one transmission having a good transmission quality as well as a plurality of transmissions all having mediocre transmission quality, but complementing each other well, may lead to the combination of all (re-)transmissions having a sufficient transmission quality.

In a further embodiment, the secondary transmission data set is scaled in accordance with a secondary transmission signal quality factor and re-scaled in accordance with the secondary transmission signal quality factor prior to the step of combining the re-scaled data set from the first transmission and the secondary data set. This equally applies to potential further re-transmissions. It is thus ensured that all data sets received are present in a low resolution, resulting in low memory requirements and improved performance in processing due to the reduced data volume, wherever processing in the low resolution is appropriate.

Furthermore, it is emphasized that the data length matching unit 22 described with respect to Figures 3 to 5 may be used for rate matching in the HARQ and rate matching unit 74 of Figure 6. The input data length mentioned in connection with Figures 3 to 5 may be equal to the length of the data set mentioned in connection with Figures 6 and 7. This equality is, however, by no means necessary.

The present invention may be applied to 3GPP UMTS, particularly up to Release 6. However, it may also be applied to other cellular/wireless communication systems, e.g. cdma2000 or UMTS L TE (Rel-8). These fields of application are by no means intended to be limiting. To the contrary, they are solely a small selection out of a wide variety of application options.

**Claims**

**1.** Method of processing a data set on a receiving side of a communication system, the data set corresponding to a source data set transmitted from a sending side of the communication system over a communication channel, wherein the data set comprises a plurality of soft data values, each soft data value corresponding to a bit of the source data set, the method comprising:

estimating a signal quality factor of the data set,
scaling the plurality of soft data values based on the signal quality factor and reducing a bit resolution of the soft data values to provide scaled soft data values,
storing the signal quality factor and the scaled soft data values in a memory, and
using the stored signal quality factor and the stored scaled data values for further processing.

2. Method according to claim 1, wherein the scaled soft data values have a low bit resolution, particularly a bit resolution of four bits per soft data value.

3. Method according to any of the claims 1 or 2, further comprising:

determining a transmission quality of the data set,
in case the transmission quality of the data set is determined to be not sufficient, requesting a re-transmission of the source data set from the sender, re-scaling the plurality of soft data values of the data set based on the signal quality factor,
combining the re-scaled data set and a secondary transmission data set into a combined data set having a plurality of combined soft data values, the secondary transmission data set corresponding to the source data set re-transmitted from the sending side over the communication channel,
calculating a combined signal quality factor of the combined data set,
scaling the plurality of combined soft data values based on the combined signal quality factor, and
determining a combined transmission quality of the combined data set.

4. Method according to any of the claims 1 to 3, further comprising rate matching of the data set(s) received.

5. Received data processing unit for processing a data set, the data set corresponding to a source data set transmitted from a sending side of the communication system over a communication channel, wherein the data set comprises a plurality of soft data values, each soft data value corresponding to a bit of the source data set, the received data processing unit comprising:

a signal quality estimation unit (70) for estimating a signal quality factor of the data set,
a scaling unit, coupled to the signal quality estimation unit (70), for scaling the plurality of soft data values based on the signal quality factor and reducing a bit resolution of the soft data values to provide scaled soft data values,
a memory (76), coupled to the signal quality estimation unit, for storing the signal quality factor and the scaled soft data values, and
a processing unit (74), coupled to the scaling unit and the memory (76), adapted to use the stored signal quality factor and the stored scaled data values for further processing.

6. Method according to claim 4, wherein the rate matching comprises matching an input bit length of input data (26), having an input data order, to an output bit length (28), with the input data being a subset of a respective data set, the matching of an input bit length to an output bit length comprising:

dividing the input data (26) into a plurality of data blocks (26a, 26b, 26c, 26d) having respective data block bit lengths;
providing a processing variable having an initial state ($e_{ini}$);
pre-calculating a block initial state ($e_{ini,i}$) of the processing variable (e) for each of the plurality of data blocks (26a, 26b, 26c, 26d);
separately processing each of the plurality of data blocks (26a, 26b, 26c, 26d), comprising:

setting a current state (e) of the processing variable to the respective block initial state ($e_{ini,i}$) of the processing variable, and
iteratively selecting a bit set, comprising a predetermined number of input bits, in accordance with the input data order, processing the respective bit set based on the current state (e) of the processing variable and updating the current state (e) of the processing variable based on
the processing of the respective bit set; and

combining the processed data blocks (28a, 28b, 28c, 28d) into output data (28) having the output bit length.

7. Method according to claim 6, implemented in the sender and/or receiver of a communication system for rate matching.

8. Method according to claim 7, wherein the communication system is in accordance with the UMTS standard.

9. Method according to any of the claims 6 to 8, wherein multiple data blocks are processed in parallel, particularly at substantially the same time.

10. Method according to any of the claims 6 to 9, wherein the pre-calculating of the block initial state ($e_{ini,i}$) of the processing variable for a respective data block depends on the initial state ($e_{ini,i}$) of the processing variable and the sum of the data block bit lengths of the data blocks preceding the respective data block.

11. Method according to any of the claims 6 to 10, wherein the pre-calculating of the block initial state ($e_{ini,i}$) of the processing variable for a respective data block depends on the input bit length of the input data (26) and the output bit length of the output data (28).

12. Method according to any of the claims 6 to 11, wherein, when used on a sending side of a communication system, the processing of the respective bit set comprises puncturing (54), repeating (64) or keeping the respective bit set unchanged, and/or, when used on a receiving side of a communication system, the processing of the respective bit set comprises de-puncturing, de-repetition or keeping the respective bit set unchanged.

13. Method according to claim 12, wherein the pre-calculating of the block initial state ($e_{ini,i}$) of the processing variable for a respective data block comprises calculating a number of bits to be punctured or repeated in all data blocks of the input data (26) preceding the respective data block.

14. Method according to claim 12 or 13, wherein the pre-calculating of the block initial state ($e_{ini,i}$) of the processing variable for a respective data block comprises calculating a number of bits to be de-punctured or de-repeated in all data blocks of the input data (26) preceding the respective data block.

15. Received data processing unit according to claim 5, further comprising a data length matching unit (22), the data length matching unit (22) comprising:

a memory (24) for storing input data (26), having an input data order and an input bit length, and output data (28), having an output bit length;
a processor being adapted to divide the input data (26) into a plurality of data blocks (26a, 26b, 26c, 26d) having respective data block lengths, to provide a processing variable having an initial state ($e_{ini}$), and to pre-calculate a block initial state ($e_{ini,i}$) of the processing variable for each of the plurality of data blocks (26a, 26b, 26c, 26d); and
a plurality of data block length adapting units (30a, 30b, 30c, 30d), each data block length adapting unit being adapted to process data blocks (26a, 26b, 26c, 26d) by:
setting a current state (e) of the processing variable to the respective block initial state ($e_{ini,i}$) of the processing variable,
iteratively selecting a bit set, comprising a predetermined number of input bits, in accordance with the input data order, processing the respective bit set based on the current state (e) of the processing variable and updating the current state (e) of the processing variable based on the processing of the respective bit set, and transmitting the processed data block to the memory (24).

Figure 1

```
                    ┌─────────────────────────┐
                    │          Start          │──2
                    └─────────────────────────┘
                                 │
                                 ▼
                    ┌─────────────────────────┐
                    │  Calculate e_ini, e_plus, e_minus  │──4
                    └─────────────────────────┘
                                 │
                                 ▼
                    ┌─────────────────────────┐
                    │      Set e = e_ini       │──6
                    └─────────────────────────┘
                                 │
                                 ▼                  8
        no     ╱─────────────────────────────────╲
       ◄───────   Unprocessed bit in input data?   ◄───────
               ╲─────────────────────────────────╱         │
                                 │ yes                      │
                                 ▼                          │
                    ┌────────────────────┐  10              │
                    │   e = e - e_minus  │                  │
                    └────────────────────┘                  │
                                 │          12       no   ┌──────────┐  14
                                 ▼     ╱──────────╲───────►│ Keep bit │──────►
                                      ╲  e <= 0 ? ╱        └──────────┘
                                       ╲────────╱
                                 │ yes
                                 ▼
                    ┌────────────────────┐  16
                    │    Puncture bit    │
                    └────────────────────┘
                                 │
                                 ▼           18
                    ┌────────────────────┐
                    │   e = e + e_plus   │──────────────────┘
                    └────────────────────┘

        ┌─────────────────────────┐  20
   ────►│          End            │
        └─────────────────────────┘
```

$e = e - e_{minus}$

$e <= 0\ ?$

$e = e + e_{plus}$

```
if puncturing is to be performed
    e = e_ini              - - initial error between current and desired puncturing ratio
    m= 1                   - - index of current bit
    do while m <= X_1
        e = e - e_minus            - - update error
        if e <= 0 then             - - check if bit number m should be punctured
            set bit X_1 to δ where δ   (0,1)
            e = e + e_plus          - - update error
        end if
        m = m + 1              - - next bit
    end do
else
    e = e_ini                  - - initial error between current and desired puncturing ratio
    m = 1                      - - index of current bit
    do while m <= X_1
        e = e - e_minus            - - update error
        do while e <= 0        - - check if bit number m should be repeated
            repeat bit X_{1,m}
            e = e + e_plus         - - update error
        end do
        m = m + 1                 - - next bit
    end do
end if
```

# Fig. 2

Input block 1 — 26a
Input block 2 — 26b
Input block 3 — 26c
Input block 4 — 26d

Output block 1 — 28a
Output block 2 — 28b
Output block 3 — 28c
Output block 4 — 28d

Memory

26

28

24

22

29

30a

30b

30c

30d

30

Fig. 3

Figure 4

```
           ┌─────────────────────────────┐  ⟍ 32
           │            Start             │
           └─────────────────────────────┘
                          │
                          ▼
           ┌─────────────────────────────┐  ⟍ 34
           │ Calculate $e_{ini}$, $e_{plus}$, $e_{minus}$ │
           └─────────────────────────────┘
                          │
                          ▼
           ┌─────────────────────────────┐  ⟍ 36
           │      Divide Input Data       │
           └─────────────────────────────┘
                          │
                          ▼
           ┌─────────────────────────────┐  ⟍ 38
           │ Calculate $e_{ini,i}$ for i=1,...,N │          ⟋ 40
           └─────────────────────────────┘
       40.1 ⟋           │                           40.N ⟋
           ▼            ▼                             ▼
  ┌──────────────┐  ┌──────────────┐        ┌──────────────┐
  │ set e = $e_{ini,1}$ │··│ set e = $e_{ini,i}$ │  ·  │ set e = $e_{ini,N}$ │
  └──────────────┘  └──────────────┘        └──────────────┘
    42.1 ⟋  │       40.i ⟋  │  ⟋ 42.i            │  ⟋ 42.N
           ▼            ▼                         ▼
  ┌──────────────┐  ┌──────────────┐        ┌──────────────┐
  │Process Block 1│··│Process Block i│  ·  │Process Block N│
  └──────────────┘  └──────────────┘        └──────────────┘
           │            │                         │
            ⟋ 42        ▼
     42           ┌─────────────────────────┐  ⟋ 44
                  │   Combine Output Data    │
                  └─────────────────────────┘
```

Figure 5A

no ── Unprocessed bit in data block? ── *46*

↓ yes

$e = e - e_{minus}$ *48*

*50* ── $e <= 0 ?$ ── no ── Keep bit *52*

↓ yes

Puncture bit *54*

$e = e + e_{plus}$ *56*

Figure 5B

```
                                                    ⟋ 58
     no    ⟨ Unprocessed bit in data block? ⟩◄─────┐
  ┌────────                                          │
  │                    ▼ yes                         │
  │          ┌──────────────────────┐  ⟋ 60         │
  │          │  e = e - e_minus     │               │
  │          └──────────────────────┘               │
  │                    ▼         ⟋ 62    no          │
  │          ⟨      e <= 0 ?      ⟩────────────────►
  │      ┌──►                                        │
  │      │             ▼ yes                         │
  │      │   ┌──────────────────────┐  ⟋ 64         │
  │      │   │     Repeat bit        │               │
  │      │   └──────────────────────┘               │
  │      │             ▼                             │
  │      │   ┌──────────────────────┐  ⟋ 66         │
  │      └───│  e = e + e_plus      │               │
  │          └──────────────────────┘               │
  │                    │                             │
  └────────────────────┘
                       ▼
```

EP 2 222 010 A1

Figure 6

EP 2 222 010 A1

Figure 7

scaling factor c_new

new re-transmission

4

82

shift left

84

rate matching

80

scaling factor c_old

86

old transmission from HARQ buffer

88

shift left

4

back to HARQ buffer

4

92

sat

90

shift right

scaling factor c_comb

Europäisches
Patentamt

European
Patent Office

Office européen
des brevets

# EUROPEAN SEARCH REPORT

Application Number

EP 09 00 2456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/276147 A1 (GHO GWANG-HYUN [US] ET AL) 6 November 2008 (2008-11-06) | 1-2,5 | INV. H04L1/18 H04L25/06 |
| Y | * abstract * | 4,6-15 | |
| A | * paragraph [0023] - paragraph [0029] * | 3 | |
| A | US 2002/107987 A1 (MALM PETER [SE]) 8 August 2002 (2002-08-08) * abstract * * paragraph [0023] - paragraph [0031]; figure 2 * | 1-3,5 | |
| Y | NOKIA SIEMENS NETWORKS ET AL: "Discussion of Parallel Implementation of UTRAN Rate Matching" 3GPP DRAFT; R1-072269_RMPARALLEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070502, 2 May 2007 (2007-05-02), XP050105999 [retrieved on 2007-05-02] * the whole document * | 4,6-15 | |
| | | | TECHNICAL FIELDS SEARCHED (IPC) |
| | | | H04L |
| A | 3GPP: "3GPP TS 25.212 V7.1.0 (2006-06) Technical Specification 3rd Generation Partnership Project; Technical Specification Group Radio Access Network; Multiplexing and channel coding (FDD) (Release 7)" INTERNET CITATION 1 June 2006 (2006-06-01), pages 1-80, XP002540579 Retrieved from the Internet: URL:http://www.3gpp.org/ftp/Specs/html-info/25212.htm> [retrieved on 2009-08-07] * page 23 - page 38 * | 4,6-15 | |

-/--

The present search report has been drawn up for all claims

| Place of search | Date of completion of the search | Examiner |
|---|---|---|
| Munich | 13 January 2010 | Martínez Martínez, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 00 2456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 708 399 A2 (FUJITSU LTD [JP]) 4 October 2006 (2006-10-04) * paragraph [0006] - paragraph [0007] * * paragraph [0016]; figures 1,2 * ----- | 4,6-15 | |

TECHNICAL FIELDS
SEARCHED      (IPC)

The present search report has been drawn up for all claims

| Place of search | Date of completion of the search | Examiner |
|---|---|---|
| Munich | 13 January 2010 | Martínez Martínez, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ........................................................................................

& : member of the same patent family, corresponding
    document

EPO FORM 1503 03.82 (P04C01)

Europäisches Patentamt

European Patent Office

Office européen des brevets

**Application Number**

EP 09 00 2456

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 09 00 2456

The Search Division considers that the present European patent application does not comply with the requirements of unity of invention and relates to several inventions or groups of inventions, namely:

    1. claims: 1-3, 5

        HARQ packet combining with reduced memory requirements.
                              ---

    2. claims: 4, 6-15

        Parallel Rate Matching.
                              ---

**ANNEX TO THE EUROPEAN SEARCH REPORT
ON EUROPEAN PATENT APPLICATION NO.**

EP 09 00 2456

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2010

| Patent document cited in search report | | Publication date | Patent family member(s) | | Publication date |
|---|---|---|---|---|---|
| US 2008276147 | A1 | 06-11-2008 | WO | 2008137845 A1 | 13-11-2008 |
| US 2002107987 | A1 | 08-08-2002 | TW<br>ZA | 531975 B<br>200109967 A | 11-05-2003<br>27-06-2002 |
| EP 1708399 | A2 | 04-10-2006 | JP<br>US | 2006279311 A<br>2006215705 A1 | 12-10-2006<br>28-09-2006 |

EPO FORM P0459

For more details about this annex : see Official Journal of the European Patent Office, No. 12/82